(19) Europäisches Patentamt
European Patent Office
Office européen des brevets

(11) **EP 4 617 148 A1**

(12) **EUROPEAN PATENT APPLICATION**
published in accordance with Art. 153(4) EPC

(43) Date of publication:
**17.09.2025 Bulletin 2025/38**

(21) Application number: **23890686.1**

(22) Date of filing: **09.11.2023**

(51) International Patent Classification (IPC):
**B62D 6/00** *(2006.01)*  **B62D 137/00** *(2006.01)*

(52) Cooperative Patent Classification (CPC):
**B62D 6/00;** Y02T 10/72

(86) International application number:
**PCT/CN2023/130834**

(87) International publication number:
**WO 2024/104251 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.11.2022 CN 202211458079**

(71) Applicant: **Great Wall Motor Company Limited Baoding, Hebei 071000 (CN)**

(72) Inventors:
• LIU, Fuxing
  **Baoding, Hebei 071000 (CN)**
• ZHOU, Dexiang
  **Baoding, Hebei 071000 (CN)**

(74) Representative: **Michalski Hüttermann & Partner Patentanwälte mbB**
**Kaistraße 16A**
**40221 Düsseldorf (DE)**

(54) **METHOD AND SYSTEM FOR CONTROLLING FRONT AND REAR WHEELS, AND ELECTRONIC DEVICE, STORAGE MEDIUM AND VEHICLE**

(57) Disclosed are a method and system for controlling front and rear wheels, an electronic device, a storage medium and a vehicle. The method includes: acquiring vehicle information; where the vehicle information includes an actual front-wheel deflection angle; processing the actual front-wheel deflection angle to obtain an expected front-wheel deflection angle; determining, based on the vehicle information, a rear-wheel deflection direction to obtain the rear-wheel deflection direction; determining, based on a center-of-mass sideslip angle of a vehicle and lateral acceleration of the vehicle, a rear-wheel deflection angle by using the expected front-wheel deflection; and controlling the front-wheels based on the expected front-wheel deflection angle, and controlling the rear wheels based on the rear-wheel deflection direction and the rear-wheel deflection angle.

Acquiring vehicle information; where the vehicle information includes an actual front-wheel deflection angle — 101

Processing the actual front-wheel deflection angle to obtain an expected front-wheel deflection angle — 102

Determining, based on the vehicle information, a rear-wheel deflection direction to obtain the rear-wheel deflection direction. — 103

Determining, based on a center-of-mass sideslip angle of a vehicle and lateral acceleration of the vehicle, a rear-wheel deflection angle by using the expected front-wheel deflection — 104

Controlling the front-wheels based on the expected front-wheel deflection angle, and controlling the rear wheels based on the rear-wheel deflection direction and the rear-wheel deflection angle — 105

FIG. 1

EP 4 617 148 A1

**Description**

**TECHNICAL FIELD**

The present disclosure relates to the field of vehicle control technologies, and in particular, to a method and system for controlling front and rear wheels, an electronic device, a storage medium, and a vehicle.

**BACKGROUND**

During vehicle driving, especially when driving on curves, factors such as excessive speed or changes in tire adhesion may cause wheel slip, leading to vehicle understeer or oversteer, resulting in loss of control and safety accidents.
In view of this, how to avoid problems of vehicle understeer and oversteer and improve driving stability and safety has become an important research issue.

**SUMMARY**

In view of this, the present disclosure is aimed to propose a method and system for controlling front and rear wheels, an electronic device, a storage medium, and a vehicle to solve problems of understeer and oversteer during vehicle driving in conventional art.
Based on the purpose mentioned above, a first aspect of the present disclosure proposes a method for controlling front and rear wheels. The method includes: acquiring vehicle information; where the vehicle information includes an actual front-wheel deflection angle; processing the actual front-wheel deflection angle to obtain an expected front-wheel deflection angle; determining, based on the vehicle information, a rear-wheel deflection direction to obtain the rear-wheel deflection direction; determining, based on a center-of-mass sideslip angle of a vehicle and lateral acceleration of the vehicle, a rear-wheel deflection angle by using the expected front-wheel deflection; and controlling the front-wheels based on the expected front-wheel deflection angle, and controlling the rear wheels based on the rear-wheel deflection direction and the rear-wheel deflection angle.
According to the first aspect, in an embodiment of the present disclosure, the vehicle information includes: vehicle speed, average front-wheel slip ratio, and average front-wheel slip rate; the processing the actual front-wheel deflection angle to obtain an expected front-wheel deflection angle includes: querying a relationship table between the vehicle speed, the average front-wheel slip ratio, and front-wheel steering control coefficients to obtain a front-wheel steering control coefficient; or, querying a relationship table between the vehicle speed, the average front-wheel slip rate, and front-wheel steering control coefficients to obtain a front-wheel steering control coefficient; performing calculation based on the front-wheel steering control coefficient and the actual front-wheel deflection angle to obtain the expected front-wheel deflection angle by

$$\delta_1 = d * \delta,$$

where $\delta_1$ is the expected front-wheel deflection angle, *d* is the front-wheel steering control coefficient, and $\delta$ is the actual front-wheel deflection angle.
According to the first aspect, in an embodiment of the present disclosure, the determining, based on a center-of-mass sideslip angle of a vehicle and lateral acceleration of the vehicle, a rear-wheel deflection angle by using the expected front-wheel deflection includes: processing the expected front-wheel deflection angle based on a rear-wheel deflection angle relationship function determined by the center-of-mass sideslip angle of the vehicle and the lateral acceleration of the vehicle to obtain the rear-wheel deflection angle; where the rear-wheel deflection angle relationship function is obtained based on a two-degree-of-freedom model algorithm of the vehicle.
According to the first aspect, in an embodiment of the present disclosure, before the processing the expected front-wheel deflection angle based on a rear-wheel deflection angle relationship function determined by the center-of-mass sideslip angle of the vehicle and the lateral acceleration of the vehicle to obtain the rear-wheel deflection angle, further including: acquiring, based on the two-degree-of-freedom model algorithm of the vehicle, a center-of-mass sideslip angle function of the vehicle, where the center-of-mass sideslip angle function of the vehicle includes the center-of-mass sideslip angle of the vehicle and the lateral acceleration of the vehicle; acquiring, based on the center-of-mass sideslip angle function of the vehicle and the expected front-wheel deflection angle, the rear-wheel deflection angle relationship function when it is determined that the center-of-mass sideslip angle of the vehicle and the lateral acceleration of the vehicle satisfy preset conditions.
According to the first aspect, in an embodiment of the present disclosure, the acquiring, based on the two-degree-of-freedom model algorithm of the vehicle, a center-of-mass sideslip angle function of the vehicle includes: acquiring, based on the two-degree-of-freedom model algorithm of the vehicle, the center-of-mass sideslip angle function by the following formula:

$$(k_1 + k_2)\beta + \frac{1}{u}(ak_1 - bk_2)\omega_r - k_1\delta_1 - k_2\delta_2 = m(\dot{v} + u\omega_r),$$

where, m is a total mass of the vehicle, a is a distance from a centroid to a front axle, b is a distance from the centroid to a rear axle, $k_1$ is cornering stiffness of the front axle, $k_2$ is cornering stiffness of the rear axle, $u$ is a longitudinal speed of the vehicle, $\dot{v}$ is acceleration of the vehicle, $\beta$ is the center-of-mass sideslip angle of the vehicle, $\omega_r$ is yaw rate of the vehicle, $\delta_1$ is the front-wheel deflection angle, and $\delta_2$ is the rear-wheel deflection angle.

According to the first aspect, in an embodiment of the present disclosure, the acquiring, based on the center-of-mass sideslip angle function of the vehicle and the expected front-wheel deflection angle, the rear-wheel deflection angle relationship function when it is determined that the center-of-mass sideslip angle of the vehicle and the lateral acceleration of the vehicle satisfy preset conditions includes: determining, based on the center-of-mass sideslip angle function of the vehicle, the rear-wheel deflection angle relationship function as the following formula, when it is determined that the sideslip angle is zero and the vehicle lateral acceleration is zero:

$$\delta_2 = -\frac{k_1}{k_2}\delta_1 + \frac{mu^2 + ak_1 - bk_1}{k_2 u}\omega_r.$$

According to the first aspect, in an embodiment of the present disclosure, the determining, based on the vehicle information, a rear-wheel deflection direction to obtain the rear-wheel deflection direction includes: determining, based on the vehicle information, a vehicle state; in response to determining the vehicle state being in a driving state, calculating slip ratio of vehicle tires, and determining, based on the slip ratio of the vehicle tires, the rear-wheel deflection direction, where the slip ratio of the vehicle tires includes: front-wheel slip ratio and rear-wheel slip ratio; or in response to determining the vehicle state being in a braking state, calculating slip rate of vehicle tires, and determining, based on the slip rate of the vehicle tires, the rear-wheel deflection direction, where the slip rate of the vehicle tires includes: front-wheel slip rate and rear-wheel slip rate.

According to the first aspect, in an embodiment of the present disclosure, the in response to determining the vehicle state is a driving state, calculating slip ratio of vehicle tires includes: in response to determining the vehicle state being in the driving state, acquiring a wheel speed of the vehicle tires, rolling radius of the vehicle tires, and a longitudinal speed of the vehicle; performing calculation on the wheel speed of the vehicle tires, the rolling radius of the vehicle tires, and the longitudinal speed of the vehicle to obtain the slip ratio of the vehicle tires by the following formula:

$$S = (\omega \cdot R - u)/(\omega \cdot R),$$

where S is the slip ratio of the vehicle tires, $\omega$ is the wheel speed of the vehicle tires, R is the rolling radius of the vehicle tires, and $u$ is the longitudinal speed of the vehicle.

According to the first aspect, in an embodiment of the present disclosure, the in response to determining the vehicle state being in a braking state, calculating slip rate of vehicle tires includes: in response to determining the vehicle state being in the braking state, acquiring a wheel speed of the vehicle tires, rolling radius of the vehicle tires, and a longitudinal speed of the vehicle; performing calculation on the wheel speed of the vehicle tires, the rolling radius of the vehicle tires, and the longitudinal speed of the vehicle to obtain the slip rate of the vehicle tires by the following formula:

$$K = (u - \omega \cdot R)/u,$$

where K is the slip rate of the vehicle tires, $\omega$ is the wheel speed of the vehicle tires, R is the rolling radius of the vehicle tires, and $u$ is the longitudinal speed of the vehicle.

According to the first aspect, in an embodiment of the present disclosure, the in response to determining the vehicle state being in a driving state, calculating slip ratio of vehicle tires, and determining, based on the slip ratio of the vehicle tires, the rear-wheel deflection direction includes: in response to determining the vehicle being in the driving state, determining the vehicle to be in an understeer state, and the rear-wheel deflection direction to be opposite to the front-wheel deflection direction, when at least one front-wheel slip ratio satisfies a first front-wheel slip ratio condition, and at least one rear-wheel slip rate satisfies a first rear-wheel slip ratio condition; or in response to determining the vehicle being in the driving state, determining the vehicle to be in an oversteer state, and the rear-wheel deflection direction to be the same as the front-wheel deflection direction, when at least one front-wheel slip ratio satisfies a second front-wheel slip ratio condition, and at least one rear-wheel slip ratio satisfies a second rear-wheel slip ratio condition.

According to the first aspect, in an embodiment of the present disclosure, the in response to determining the vehicle state being in a braking state, calculating slip rate of vehicle tires, and determining, based on the slip rate of the vehicle tires, the rear-wheel deflection direction includes: in response to determining the vehicle being in the braking state, determining the vehicle to be in an understeer state, and the rear-wheel deflection direction to be opposite to the front-wheel deflection direction, when at least one front-wheel slip rate satisfies a first front-wheel slip rate condition and at least one rear-wheel slip rate satisfies a first rear-wheel slip rate condition; or in response to determining the vehicle being in the braking state, determining the vehicle to be in an oversteer state, and the rear-wheel deflection direction to be the same as the front-wheel deflection direction, when at least one front-wheel slip rate satisfies a second front-wheel slip rate condition and at least one rear-wheel slip rate satisfies a second rear-wheel slip rate condition.

Based on a same inventive concept, a second aspect of the present disclosure proposes a system for controlling front and rear wheels, including: a vehicle information acquisition module, configured to acquire vehicle information; where the vehicle information includes an actual front-wheel deflection angle; a front-wheel expected deflection angle acquisition module, configured to process the actual front-wheel deflection angle to obtain an expected front-wheel deflection angle; a rear-wheel deflection direction acquisition module, configured to determine, based on the vehicle information, a rear-wheel deflection direction to obtain the rear-wheel deflection direction; a rear-wheel deflection angle acquisition module, configured to determine, based on a center-of-mass sideslip angle of a vehicle and lateral acceleration of the vehicle, a rear-wheel deflection angle by using the expected front-wheel deflection; and a vehicle control module, configured to control the front-wheels based on the expected front-wheel deflection angle, and control the rear wheels based on the rear-wheel deflection direction and the rear-wheel deflection angle.

Based on the same inventive concept, a third aspect of the present disclosure proposes an electronic device, including a memory, a processor, and a computer program stored on the memory and executable on the processor, where the processor is configured to execute the program to implement the aforementioned method.

Based on the same inventive concept, a fourth aspect of the present disclosure proposes a non-transitory computer-readable storage medium, where computer instructions are stored and the computer instructions are configured to be executed by a computer to implement the aforementioned method.

Based on the same inventive concept, a fifth aspect of the present disclosure proposes a vehicle, including the system for controlling front and rear wheels of the second aspect, or the electronic device of the third aspect, or the storage medium of the fourth aspect.

As can be seen from the above, according to the method and system for controlling front and rear wheels, the electronic device, the storage medium, and the vehicle provided by the present disclosure, an actual front-wheel deflection angle is processed to obtain an expected front-wheel deflection angle. The front-wheels of the vehicle are controlled based on the expected front-wheel deflection angle, which is more accurate than directly controlling the front-wheels of the vehicle through a steering wheel in related technologies. By using the expected front-wheel deflection angle, a rear-wheel deflection angle is determined based on a center-of-mass sideslip angle of a vehicle and lateral acceleration of the vehicle. When the center-of-mass sideslip angle of the vehicle and the lateral acceleration of the vehicle satisfy preset conditions, the rear-wheel deflection angle is obtained, and the rear wheels of the vehicle are adjusted based on the obtained rear-wheel deflection angle and a rear-wheel deflection direction obtained through determination, thereby ensuring smoothness of the vehicle during steering. In a case of understeer or oversteer, through the above solution, the deflection angles of the front and rear wheels are controlled and adjusted together during vehicle steering, making the vehicle more stable during steering than only controlling the rear wheels, thereby improving driving safety.

## BRIEF DESCRIPTION OF THE DRAWINGS

In order to illustrate technical solutions of the present disclosure or related technologies more clearly, accompanying drawings needed in the embodiments or related technology descriptions will be introduced briefly in the following. Obviously, the accompanying drawings in the following description are only embodiments of the present disclosure. For those skilled in the art, other accompanying drawings may be obtained based on these accompanying drawings without creative effort.

FIG. 1 is a flowchart of a method for controlling front and rear wheels according to an embodiment of the present disclosure.
FIG. 2 is a first part of a flowchart of an embodiment in another application scenario of the present disclosure.
FIG. 3 is a second part of the flowchart of the embodiment in another application scenario of the present disclosure.

FIG. 4 is a schematic structural diagram of a system for controlling front and rear wheels according to an embodiment of the present disclosure.

FIG. 5 is a schematic structural diagram of an electronic device according to an embodiment of the present disclosure.

## DETAILED DESCRIPTION OF THE EMBODIMENTS

In order to make objectives, technical solutions, and advantages of the present disclosure clearer, the present disclosure will be described in detail in conjunction with specific embodiments and with reference to the accompanying drawings in the following.

It should be noted that unless otherwise defined, technical terms or scientific terms used in the embodiments of the present disclosure shall have usual meanings understood by those skilled in the art to which the present disclosure belongs. Terms 'first', 'second', and similar terms used in the embodiments of the present disclosure do not denote any order, quantity, or importance, but are merely used to distinguish different components. Terms such as 'including' or 'comprising' mean that the elements or items preceding the term cover the elements or items listed after the term and their equivalents, without excluding other elements or items. Terms such as 'connected' or 'linked' are not limited to physical or mechanical connections, but may include electrical connections, whether direct or indirect. Terms such as 'upper', 'lower', 'left', and 'right' are only used to indicate relative positional relationships. When the absolute position of the described object changes, the relative positional relationship may also change accordingly.

As mentioned above, during vehicle driving, especially when driving on curves, there are factors such as excessive speed or changes in tire adhesion that may cause wheel slip, leading to understeer or oversteer issues.

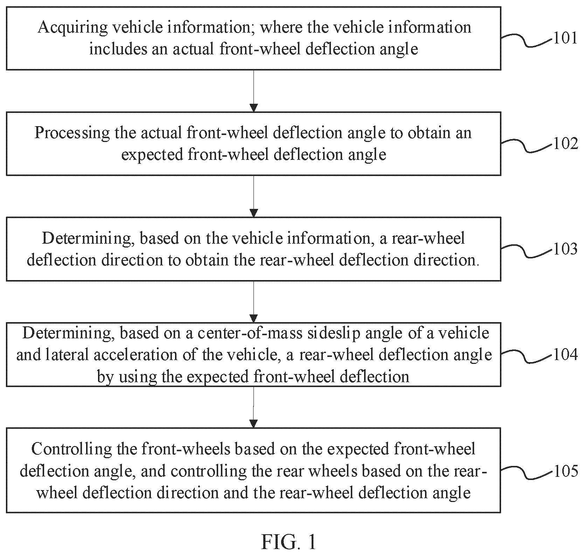

Based on the above description, as shown in FIG. 1, the present embodiment provides a method for controlling front and rear wheels, including the following steps.

Step 101: acquiring vehicle information; where the vehicle information includes an actual front-wheel deflection angle.

In specific implementation, the vehicle information is acquired, which includes basic vehicle information and vehicle operation information. The basic vehicle information includes at least one of the following: vehicle mass and vehicle tire information, and the vehicle operation information includes at least one of the following: vehicle steering angle information, vehicle speed, and vehicle gear information. There are various ways to obtain he vehicle information, for example, corresponding sensors may be used to collect corresponding vehicle operation information.

In the above solution, a rear-wheel deflection direction may be determined based on the obtained vehicle information, thereby improving accuracy of the determination. Meanwhile, a rear-wheel deflection angle may be obtained based on the rear-wheel deflection direction and subsequently calculation, as that adjustment of the vehicle steering may be achieved by adjusting the rear wheels, thereby improving stability of the vehicle during driving.

Step 102: processing the actual front-wheel deflection angle to obtain an expected front-wheel deflection angle.

In specific implementation, the obtained vehicle information includes the actual front-wheel deflection angle, and a front-wheel steering control coefficient is obtained. By performing calculation on the actual front-wheel deflection angle and the front-wheel steering control coefficient, the expected front-wheel deflection angle is obtained. Therein, the actual front-wheel deflection angle is a current front-wheel deflection angle obtained through a steering wheel. The front-wheel steering control coefficient is a coefficient that reflects a relationship between the actual front-wheel deflection angle and the expected front-wheel deflection angle. The front-wheel steering control coefficient may be obtained by looking up a table and is related to the vehicle speed, and average front-wheel slip rate or average front-wheel slip ratio. The expected front-wheel deflection angle is a deflection angle required for the front-wheels to ensure the stability of the vehicle during steering.

In the above solution, the expected front-wheel deflection angle is calculated based on the actual front-wheel deflection angle and the front-wheel steering control coefficient. Then, based on the calculated expected front-wheel deflection angle, the front-wheels of the vehicle are controlled, which is more precise than directly controlling the front-wheels through the steering wheel in related technologies.

Step 103: determining, based on the vehicle information, a rear-wheel deflection direction to obtain the rear-wheel deflection direction.

In specific implementation, the rear-wheel deflection direction is determined based on the vehicle information to obtain the rear-wheel deflection direction. And the vehicle state is determined based on the vehicle information. In response to the vehicle being in an understeer state, the rear wheels are determined to steer in an opposite direction to the front wheels; or in response to the vehicle being in an oversteer state, the rear wheels are determined to steer in a same direction as the front wheels.

In the above solution, based on the rear-wheel deflection direction and a rear-wheel deflection angle which will be obtained in subsequent calculation, the vehicle steering may be adjusted by regulating the rear wheels, thereby improving the stability of the vehicle during driving.

Step 104: determining, based on a center-of-mass sideslip angle of a vehicle and lateral acceleration of the vehicle, a rear-wheel deflection angle by using the expected front-wheel deflection.

In specific implementation, a center-of-mass sideslip angle function is obtained through calculation based on the expected front-wheel deflection angle calculated above and a two-degree-of-freedom (2-DOF) model algorithm of the vehicle. The rear-wheel deflection angle is obtained based on the expected front-wheel deflection angle and the center-of-mass sideslip angle function. Based on the center-of-mass sideslip angle function obtained above, when parameter information meets preset conditions, the rear-wheel deflection angle is obtained. Therein, the preset conditions include that a center-of-mass sideslip angle is zero and lateral acceleration of the vehicle is zero.

In the above solution, the center-of-mass sideslip angle function is obtained through calculation based on the 2-DOF model algorithm of the vehicle. Then, the rear-wheel deflection angle is calculated based on the expected front-wheel deflection angle and the center-of-mass sideslip angle function calculated above, so that the calculation results are more accurate. The vehicle steering is adjusted by using the rear-wheel deflection angle, together with the rear-wheel deflection direction determined in the above steps, so that driving safety may be improved.

Step 105: controlling the front-wheels based on the expected front-wheel deflection angle, and controlling the rear wheels based on the rear-wheel deflection direction and the rear-wheel deflection angle.

In specific implementation, the expected front-wheel deflection angle is sent to a controller to control the front wheels, and the rear-wheel deflection direction and the rear-wheel deflection angle are sent to the controller to control the rear wheels.

In the above solution, the front-wheels of the vehicle are controlled based on the expected front-wheel deflection angle, and the rear wheels of the vehicle are controlled based on the rear-wheel deflection direction and rear-wheel deflection angle, thereby achieving coordinated control of the front and rear wheels.

In the above embodiment, the actual front-wheel deflection angle is processed to obtain the expected front-wheel deflection angle, and the front-wheels of the vehicle are controlled based on the expected front-wheel deflection angle, which is more precise than directly controlling the front-wheels through the steering wheel in related technologies. The rear-wheel deflection angle is determined based on the center-of-mass sideslip angle of the vehicle and the lateral acceleration of the vehicle by using the expected front-wheel deflection angle. When the center-of-mass sideslip angle of the vehicle and the lateral acceleration of the vehicle meet the preset conditions, the rear-wheel deflection angle is obtained. The rear wheels of the vehicle are adjusted based on the obtained rear-wheel deflection angle and the determined rear-wheel deflection angle obtained through determination, which may ensure the smoothness of the vehicle during steering. In a case of understeer or oversteer, through the above solution, the steering angles of the front and rear wheels are controlled and adjusted together during vehicle steering, making the vehicle more stable during steering than only controlling the rear wheels, thereby improving driving safety.

In some embodiments, the vehicle information includes: vehicle speed, average front-wheel slip ratio, and average front-wheel slip rate.

Step 102 includes the following steps.

Step 1021: querying a relationship table between the vehicle speed, the average front-wheel slip ratio, and front-wheel steering control coefficients to obtain a front-wheel steering control coefficient; or querying a relationship table between the vehicle speed, the average front-wheel slip rate, and front-wheel steering control coefficients to obtain a front-wheel steering control coefficient.

Step 1022: performing calculation based on the front-wheel steering control coefficient and the actual front-wheel deflection angle to obtain the expected front-wheel deflection angle by: $\delta_1 = d * \delta$.

Therein, $\delta_1$ is the expected front-wheel deflection angle, $d$ is the front-wheel steering control coefficient, and $\delta$ is the actual front-wheel deflection angle.

In specific implementation, when the vehicle is in a driving state, the acquired vehicle information includes the average front-wheel slip ratio. By querying the relationship table between the vehicle speed, the average front-wheel slip ratio and the front-wheel steering control coefficient, the front-wheel steering control coefficient may be determined based on the vehicle speed and the average front-wheel slip ratio. For example, when the vehicle speed is zero and the average front-wheel slip ratio is -0.2%, the front-wheel steering control coefficient is 0.8.

When the vehicle is in a braking state, the acquired vehicle information includes the average front-wheel slip rate. By querying the relationship table between the vehicle speed, the average front-wheel slip rate, and front-wheel steering control coefficient, the front-wheel steering control coefficient may be determined based on the vehicle speed and the average front-wheel slip rate. For example, when the vehicle speed is zero and the average front-wheel slip rate is 0.2%, the front-wheel steering control coefficient is 0.8.

Based on the front-wheel steering control coefficient and the actual front-wheel deflection angle, the expected front-wheel deflection angle is calculated by the following formula: $\delta_1 = d * \delta$.

Therein, $\delta_1$ is the expected front-wheel deflection angle, $d$ is the front-wheel steering control coefficient, and $\delta$ is the actual front-wheel deflection angle.

The actual front-wheel deflection angle is a current front-wheel deflection angle of the vehicle obtained through a steering wheel. The front-wheel steering control coefficient is a coefficient that reflects a relationship between the actual front-wheel deflection angle and the expected front-wheel deflection angle, which can be obtained by looking up a table and is related to the vehicle speed, and the average front-wheel slip ratio or the average front-wheel slip rate. The expected front-wheel deflection angle is a deflection angle required for the front-wheels to ensure the stability of the vehicle during steering.

In the above solution, the expected front-wheel deflection angle is calculated based on the actual front-wheel deflection angle and the front-wheel steering control coefficient. Then, based on the calculated expected front-wheel deflection angle, the front-wheels of the vehicle are controlled, which is more precise than directly controlling the front-wheels through the steering wheel in related technologies.

In some embodiments, step 104 includes the following steps.

Step 104A: processing the expected front-wheel deflection angle based on a rear-wheel deflection angle relationship function determined by the center-of-mass sideslip angle of the vehicle and the lateral acceleration of the vehicle to obtain the rear-wheel deflection angle; where the rear-wheel deflection angle relationship function is obtained based on a two-degree-of-freedom model algorithm of the vehicle.

In specific implementation, the rear-wheel deflection angle relationship function is obtained based on the two-degree-of-freedom model algorithm of the vehicle, and the expected front-wheel deflection angle is substituted into the rear-wheel deflection angle relationship function to obtain the rear-wheel deflection angle.

In some embodiments, before step 104, the method further includes the following steps.

Step 1041: acquiring, based on the two-degree-of-freedom model algorithm of the vehicle, a center-of-mass sideslip angle function of the vehicle, where the center-of-mass sideslip angle function of the vehicle includes the center-of-mass sideslip angle of the vehicle and the lateral acceleration of the vehicle.

Step 1042: acquiring, based on the center-of-mass sideslip angle function of the vehicle and the expected front-wheel deflection angle, the rear-wheel deflection angle relationship function when it is determined that the center-of-mass sideslip angle of the vehicle and the lateral acceleration of the vehicle satisfy preset conditions.

In specific implementation, when the vehicle is steering, the influence of centripetal force causes additional side slip force on tires of the vehicle, resulting in tire sideslip angle, which affects the center-of-mass sideslip angle. The smaller the center-of-mass sideslip angle is, the smaller the tendency for tire side slip is, and the better the handling stability is. The center-of-mass sideslip angle function is obtained based on the two-degree-of-freedom model algorithm of the vehicle. Based on the obtained center-of-mass sideslip angle function, when the center-of-mass sideslip angle of the vehicle and the lateral acceleration of the vehicle meet the preset conditions, the rear-wheel deflection angle relationship function is obtained. Therein, the preset conditions include that the center-of-mass slip angle of the vehicle is zero and the lateral acceleration of the vehicle is zero.

In the above solution, the center-of-mass sideslip angle function is obtained by calculation, and the rear-wheel deflection angle is calculated based on the function, thereby achieving vehicle control, reducing the tendency for tire side slip, and improving driving smoothness.

In some embodiments, step 1041 includes the following steps.

Step 1041A: acquiring, based on the vehicle two-degree-of-freedom model algorithm, the center-of-mass sideslip angle function by the following formula:

$$(k_1 + k_2)\beta + \frac{1}{u}(ak_1 - bk_2)\omega_r - k_1\delta_1 - k_2\delta_2 = m(\dot{v} + u\omega_r).$$

Therein, m is a total mass of the vehicle, a is a distance from a centroid to a front axle, b is a distance from the centroid to a rear axle, $k_1$ is cornering stiffness of the front axle, $k_2$ is cornering stiffness of the rear axle, $u$ is a longitudinal speed of the vehicle, $\dot{v}$ is acceleration of the vehicle, $\beta$ is the center-of-mass sideslip angle of the vehicle, $\omega_r$ is yaw rate of the vehicle, $\delta_1$ is the front-wheel deflection angle, and $\delta_2$ is the rear-wheel deflection angle.

In specific implementation, the center-of-mass sideslip angle function is obtained based on the two-degree-of-freedom model algorithm of the vehicle.

In the above solution, the rear-wheel deflection angle relationship function of the vehicle is calculated by the center-of-mass sideslip angle function. In subsequent steps, the rear-wheel deflection angle is calculated based on the rear-wheel deflection relationship function of the vehicle, thereby making the rear-wheel deflection angle more accurate.

In some embodiments, step 1042 includes the following steps.

Step 1042A: determining, based on the center-of-mass sideslip angle function of the vehicle, the rear-wheel deflection angle relationship function as the following formula, when it is determined that the sideslip angle is zero and the vehicle lateral acceleration is zero:

$$\delta_2 = -\frac{k_1}{k_2}\delta_1 + \frac{mu^2 + ak_1 - bk_1}{k_2 u}\omega_r.$$

In specific implementation, by substituting the center-of-mass sideslip angle $\beta$ as zero and the lateral acceleration of the vehicle $\dot{v}$ as zero into the center-of-mass sideslip angle function of the vehicle, the rear-wheel deflection angle of the vehicle is obtained.

In the above solution, when the center-of-mass sideslip angle $\beta$ is zero, the center-of-mass sideslip angle may be controlled within a stable working range, so that the rear-wheel deflection angle of the vehicle may maintain the smoothness of the vehicle during driving.

In some embodiments, step 103 includes the following steps.

Step 1031: determining, based on the vehicle information, a vehicle state.

In specific implementation, the vehicle information includes gear information and acceleration information, and the vehicle state is determined based on the gear information and the acceleration information to determine whether the vehicle is in a driving state or a braking state.

The acceleration information and the gear information of the vehicle are obtained through internal sensors of the vehicle, and the vehicle state is determined based on the vehicle acceleration information and the gear information. The vehicle state refers to a state of the vehicle under different accelerations and different gears, including one of the following states: a forward driving state, a forward braking state, a reverse braking state, and a reverse driving state.

The vehicle acceleration is positive when pointing towards the front of the vehicle and negative when pointing towards the rear of the vehicle. In response to the gear information being forward gear and the acceleration information being positive, the vehicle state may be determined to be the forward driving state; in response to the gear information being the forward gear and the acceleration information being negative, the vehicle state may be determined to be the forward braking state; in response to the gear information being reverse gear and the acceleration information being positive, the vehicle state may be determined to be the reverse braking state; and in response to the gear information being the reverse gear and the acceleration information being negative, the vehicle state may be determined to be the reverse driving state.

Step 1032: in response to determining the vehicle state being in a driving state, calculating slip ratio of vehicle tires, and determining, based on the slip ratio of the vehicle tires, the rear-wheel deflection direction, where the slip ratio of the vehicle tires includes: front-wheel slip ratio and rear-wheel slip ratio.

In specific implementation, the calculation process of the slip ratio of the vehicle tires includes the following steps.

Step 10321: obtaining a wheel speed of the vehicle tires, a rolling radius of the vehicle tires, and a longitudinal speed of the vehicle.

Step 10322: performing calculation on the wheel speed of the vehicle tires, the rolling radius of the vehicle tires, and the longitudinal speed of the vehicle to obtain the slip ratio of the vehicle tires by the following formula: $S = (\omega \cdot R - u)/(\omega \cdot R)$. Therein, S is the slip ratio of the vehicle tires, $\omega$ is the wheel speed of the vehicle tires, R is the rolling radius of the vehicle tires, and u is the longitudinal speed of the vehicle.

Step 1033: in response to determining the vehicle state being in the braking state, calculating slip rate of the vehicle tires, and determining the rear-wheel deflection direction based on the slip rate of the vehicle tires, where the slip rate of the vehicle tires includes: front-wheel slip rate and rear-wheel slip rate.

In specific implementation, the calculation process of the slip rate of the vehicle tires includes the following steps.

Step 10331: obtaining the wheel speed of the vehicle tires, the rolling radius of the vehicle tires, and the longitudinal speed of the vehicle.

Step 10332: performing calculation on the wheel speed of the vehicle tires, the rolling radius of the vehicle tires, and the longitudinal speed of the vehicle to obtain the slip rate of the vehicle tires by the following formula: $K = (u - \omega \cdot R)/u$. Therein, K is the slip rate of the vehicle tires, $\omega$ is the wheel speed of the vehicle tires, R is the rolling radius of the vehicle tires, and u is the longitudinal speed of the vehicle.

In the above solution, the slip rate or the slip ratio of the vehicle wheels is calculated for subsequent judgment of the rear-wheel deflection direction, making the judgment more accurate.

In some embodiments, Step 1032 includes the following steps.

Step 1032A: in response to determining the vehicle being in the driving state, when at least one front-wheel slip ratio satisfies a first front-wheel slip ratio condition, and at least one rear-wheel slip ratio satisfies a first rear-wheel slip ratio condition, determining the vehicle being in an understeer state, and the rear-wheel deflection direction of the vehicle being opposite to the front-wheel deflection direction.

Step 1032B: in response to determining the vehicle being in the driving state, when at least one front-wheel slip ratio satisfies a second front-wheel slip ratio condition, and at least one rear-wheel slip ratio satisfies a second rear-wheel slip ratio condition, determining the vehicle being in an oversteer state, and the rear-wheel deflection direction of the vehicle being the same as the front-wheel deflection direction.

In specific implementation, the first front-wheel slip ratio condition is that at least one front-wheel slip ratio is calculated to be less than or equal to -10% firstly, and then at least one rear-wheel slip ratio is calculated to be less than or equal to -10%. The second front-wheel slip ratio condition is that at least one rear-wheel slip ratio is calculated to be less than or equal to -10% firstly, and then at least one front-wheel slip ratio is calculated to be less than or equal to -10%. For example, when the vehicle is in the driving state, if at least one front-wheel slip ratio is calculated to be less than or equal to -10% firstly, and then at least one rear-wheel slip ratio is calculated to be less than or equal to -10%, the rear-wheel deflection direction of the vehicle is opposite to the front-wheel deflection direction. If at least one rear-wheel slip ratio is calculated to be less than or equal to -10% firstly, and then at least one front-wheel slip ratio is calculated to be less than or equal to -10%, the rear-wheel deflection direction of the vehicle is the same as the front-wheel deflection direction.

Step 1033 includes the following steps.

Step 1033A: in response to determining the vehicle being in a braking state, when at least one front-wheel slip rate satisfies a first front-wheel slip rate condition, and at least one rear-wheel slip rate satisfies a first rear-wheel slip rate condition, determining the vehicle being in an understeer state, and the rear-wheel deflection direction of the vehicle being opposite to the front-wheel deflection direction.

Step 1033B: in response to determining the vehicle being in the braking state, when at least one front-wheel slip rate satisfies a second front-wheel slip rate condition, and at least one rear-wheel slip rate satisfies a second rear-wheel slip rate condition, determining the vehicle being in an oversteer state, and the rear-wheel deflection direction of the vehicle being the same as the front-wheel deflection direction.

In specific implementation, the first front-wheel slip rate condition is that at least one front-wheel slip rate is greater than or equal to 10%, and the rear-wheel slip rate is equal to 10%. The second rear-wheel slip rate condition is that at least one rear-wheel slip rate is greater than or equal to 10%, and the front-wheel slip rate is equal to 10%. For example, when the vehicle is in the braking state, if at least one front-wheel slip rate is greater than 10%, and rear-wheel slip rate is equal to 10%, the rear-wheel deflection direction of the vehicle is opposite to the front-wheel deflection direction. If at least one rear-wheel slip rate is greater than or equal to 10%, and the front-wheel slip rate is equal to 10%, the rear-wheel deflection direction of the vehicle is the same as the front-wheel deflection direction.

In the above solution, the slip ratio or the slip rate of the vehicle tires is calculated respectively based on the vehicle state, and the rear-wheel deflection direction of the vehicle is determined according to the conditions satisfied by the slip ratio or the slip rate. The rear wheels of the vehicle are controlled to achieve the same deflection direction or opposite deflection direction as the front wheels according to the determined rear-wheel deflection direction of the vehicle. When the rear-wheel deflection direction of the vehicle is opposite to the front-wheel deflection direction, it can prevent the vehicle head from sliding out along a tangent direction of a curve; when the rear-wheel deflection direction of the vehicle is the same as the front-wheel deflection direction, it can prevent the vehicle tail from sliding out along the tangent direction of the curve, thereby reducing safety risks.

In the above embodiment, the actual front-wheel deflection angle is processed to obtain the expected front-wheel deflection angle, and the front-wheels of the vehicle are controlled based on the expected front-wheel deflection angle, which is more precise than directly controlling the front-wheels through the steering wheel in related technologies. The rear-wheel deflection angle is determined based on the center-of-mass sideslip angle of the vehicle and the lateral acceleration of the vehicle by using the expected front-wheel deflection angle. When the center-of-mass sideslip angle of the vehicle and the lateral acceleration of the vehicle meet the preset conditions, the rear-wheel deflection angle is obtained. The rear wheels of the vehicle are adjusted based on the obtained rear-wheel deflection angle and the determined rear-wheel deflection angle obtained through determination, which may ensure the smoothness of the vehicle during steering. In a case of understeer or oversteer, through the above solution, the steering angles of the front and rear wheels are controlled and adjusted together during vehicle steering, making the vehicle more stable during steering than only controlling the rear wheels, thereby improving driving safety.

During vehicle driving, preferably when the vehicle is driving on a curve, a front-wheel state includes an out-of-control state and a non-out-of-control state.

In response to the tire force not exceeding a friction circle, when the front wheels of the vehicle are determined to be in the non-out-of-control state, the steps of the above embodiment are executed. By adjusting both the front wheels and the rear wheel of the vehicle, the vehicle deflection direction is adjusted.

By acquiring tire force information of the vehicle, in response to the tire force exceeding the friction circle, when the front wheels of the vehicle are determined to be in the out-of-control state, a process of steps 103-104 of the above embodiment is executed. By adjusting the rear-wheel deflection direction and the rear-wheel deflection angle of the vehicle, the vehicle deflection direction is adjusted.

It should be noted that the embodiments of the present disclosure may also be further described in the following manner.

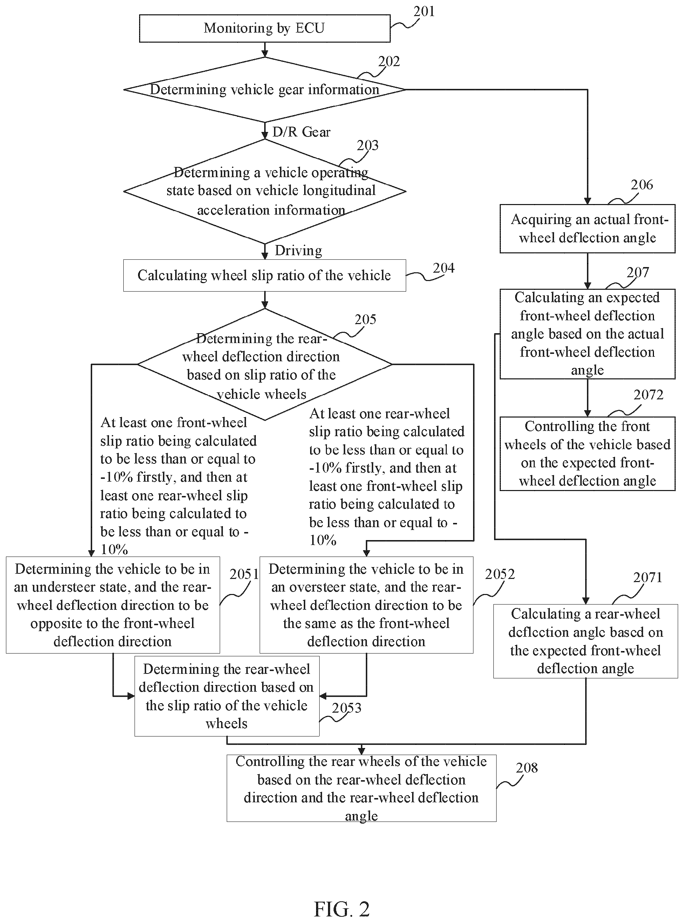

Based on a same inventive concept, in response to the vehicle being in a driving state, another embodiment of the present disclosure in an application scenario is shown in FIG. 2, and the method includes the following steps.

Step 201: acquiring vehicle information.

In specific implementation, the vehicle information is monitored and obtained through an Electronic Control Unit (ECU), and the vehicle information includes basic vehicle information, vehicle operation information, front-wheel angle information, etc. The basic vehicle information includes a vehicle mass, vehicle tire information, etc. The vehicle operation information includes vehicle angle information, vehicle speed, vehicle gear information, etc. The front-wheel angle information is obtained through a steering wheel. Through the above solution, the rear-wheel deflection direction may be determined based on the obtained vehicle information, and subsequent steps, thereby improving the accuracy of the judgment.

Step 202: determining vehicle gear information.

In specific implementation, the vehicle gear information is obtained through internal sensors of the vehicle. The gear information includes a forward gear (D gear) and a reverse gear (R gear), which provide basis for subsequent determination of the rear-wheel deflection direction of the vehicle.

Step 203: determining a vehicle operating state based on vehicle longitudinal acceleration information.

In specific implementation, the vehicle interior includes a vehicle speed sensor, which collects the vehicle's longitudinal speed. Based on the obtained longitudinal speed, the longitudinal acceleration of the vehicle is calculated. The vehicle's operating state, including driving state and braking state, is determined based on the longitudinal acceleration information. Through the above solution, the operating state of the vehicle is determined based on the longitudinal acceleration information. In subsequent steps, in response to the vehicle being in the driving state, the wheel slip ratio is calculated; in response to the vehicle being in the braking state, the wheel slip rate is calculated for subsequent determination of the rear-wheel deflection direction.

Step 204: calculating wheel slip ratio of the vehicle.

In specific implementation, vehicle information is obtained through sensors, including a wheel speed, tire rolling radius, a longitudinal speed, gear information, and vehicle acceleration information. The vehicle includes a wheel speed sensor and a vehicle speed sensor. The wheel speed is collected by the wheel speed sensor, and the longitudinal speed of the vehicle is collected by the vehicle speed sensor. A tire rolling radius characteristic map is obtained through a tire drum test, and the tire rolling radius is determined based on tire pressure and speed information. Based on the above vehicle information, the slip rate or the slip ratio of the wheel may be calculated, and the rear-wheel deflection direction is determined based on the calculated slip ratio. The wheel slip ratio of the vehicle is calculated by the following formula:

$$S = (\omega \cdot R - u)/(\omega \cdot R).$$

Therein, S is the slip ratio of the vehicle tires, $\omega$ is the wheel speed of the vehicle tires, R is the rolling radius of the vehicle tires, and $u$ is the longitudinal speed of the vehicle.

Step 205: determining the rear-wheel deflection direction based on slip ratio of the vehicle wheels.

In specific implementation, the vehicle state is determined based on the calculated wheel slip ratio. The vehicle state refers to an operating state of the vehicle at a current moment, including an understeer state and an oversteer state. According to the above solution, the rear-wheel deflection direction is determined by the calculated slip ratio, and the rear-wheel control is achieved by the rear-wheel deflection direction in conjunction with a rear-wheel deflection angle obtained in the following steps, so that a judgment result is more accurate, thereby improving driving safety.

In some embodiments, step 205 specifically includes the following steps.

Step 2051: in response to at least one front-wheel slip ratio being calculated to be less than or equal to -10% firstly, and then at least one rear-wheel slip ratio being calculated to be less than or equal to -10%, determining the vehicle to be in an understeer state, and the rear-wheel deflection direction to be opposite to the front-wheel deflection direction.

In specific implementation, by determining the wheel slip ratio satisfies the condition that at least one front-wheel slip ratio is calculated to be less than or equal to -10% firstly, and then at least one rear-wheel slip ratio is calculated to be less than or equal to -10%, the vehicle is determined to be in the understeer state, and the rear-wheel deflection direction is determined to be opposite to the front-wheel deflection direction, which are used in subsequent steps to calculate a rear-wheel deflection angle. By controlling the rear wheels to adjust according to the opposite deflection direction relative to the front wheels and the rear-wheel deflection angle, a vehicle front may be prevented from sliding out along a tangent direction of a curve, thereby reducing safety risks.

Step 2052: in response to at least one rear-wheel slip ratio being calculated to be less than or equal to -10% firstly, and then at least one front-wheel slip ratio being calculated to be less than or equal to -10%, determining the vehicle to be in an oversteer state, and the rear-wheel deflection direction to be the same as the front-wheel deflection direction.

In specific implementation, by determining the wheel slip ratio satisfies the condition that at least one rear-wheel slip ratio is calculated to be less than or equal to -10% firstly, and then at least one front-wheel slip ratio is calculated to be less than or equal to -10%, the vehicle is determined to be in the oversteer state, and the rear-wheel deflection direction is determined to be the same as the front-wheel deflection direction, which are used in subsequent steps to calculate a rear-wheel deflection angle. By controlling the rear wheels to adjust according to the opposite deflection direction relative to the front wheels and the rear-wheel deflection angle, a vehicle rear may be prevented from sliding out along a tangent direction of a curve, thereby reducing safety risks.

Step 2053: determining the rear-wheel deflection direction based on the slip ratio of the vehicle wheels.

In specific implementation, the rear-wheel deflection direction is determined based on the calculated wheel slip ratio. The deflection direction includes a deflection direction opposite to the front-wheel deflection direction or a deflection direction which is the same as the front-wheel deflection direction. In response to determining the vehicle being in the understeer state based on the wheel slip ratio, the rear-wheel deflection direction is determined to be opposite to the front-wheel deflection direction; in response to determining the vehicle being in the oversteer state based on the wheel slip ratio, the rear-wheel deflection direction is determined to be the same as the front-wheel deflection direction, thereby making a judgment result more accurate.

Step 206: acquiring an actual front-wheel deflection angle.

In specific implementation, the actual front-wheel deflection angle is obtained through the steering wheel of the vehicle.

Step 207: calculating an expected front-wheel deflection angle based on the actual front-wheel deflection angle.

In specific implementation, the expected front-wheel deflection angle is obtained by performing calculation based on a front-wheel steering control coefficient and the actual front-wheel deflection angle through the following formula: $\delta_1 = d * \delta$.

Therein, $\delta_1$ is the expected front-wheel deflection angle, $d$ is the front-wheel steering control coefficient, and $\delta$ is the actual front-wheel deflection angle.

The front-wheel steering control coefficient is obtained by querying a relationship table between the vehicle speed, an average front-wheel slip ratio, and the front-wheel steering control coefficient.

In specific implementation, when the vehicle is in a driving state, the vehicle information includes the average front-wheel slip ratio. By querying the relationship table between the vehicle speed, the average front-wheel slip ratio and the front-wheel steering control coefficient, the front-wheel steering control coefficient may be determined based on the vehicle speed and the average front-wheel slip ratio. For example, when the vehicle speed is zero and the average front-wheel slip ratio is -0.2%, the front-wheel steering control coefficient is 0.8.

When the vehicle is in a braking state, the acquired vehicle information includes the average front-wheel slip rate. By querying the relationship table between the vehicle speed, the average front-wheel slip rate, and front-wheel steering control coefficient, the front-wheel steering control coefficient may be determined based on the vehicle speed and the average front-wheel slip rate. For example, when the vehicle speed is zero and the average front-wheel slip rate is 0.2%, the front-wheel steering control coefficient is 0.8.

In some embodiments, step 207 specifically includes the following steps.

Step 2071: calculating a rear-wheel deflection angle based on the expected front-wheel deflection angle.

In specific implementation, after the vehicle operation information is obtained, a center-of-mass sideslip angle function is obtained through calculation on the vehicle operation information based on a two-degree-of-freedom model algorithm of the vehicle.

The vehicle operation information includes a longitudinal speed $u$, acceleration $\dot{v}$, a center-of-mass sideslip angle $\beta$, and yaw rate of the vehicle $\omega_r$. The vehicle operation information is substituted into the two-degree-of-freedom vehicle model algorithm for calculation, so that the vehicle center-of-mass sideslip angle function is obtained as the following formula:

$$(k_1 + k_2)\beta + \frac{1}{u}(ak_1 - bk_2)\omega_r - k_1\delta_1 - k_2\delta_2 = m(\dot{v} + u\omega_r).$$

Therein, m is a total mass of the vehicle, a is a distance from a centroid to a front axle, b is a distance from the centroid to a rear axle, $k_1$ is cornering stiffness of the front axle, $k_2$ is cornering stiffness of the rear axle, $\delta_1$ is the front-wheel deflection angle, and $\delta_2$ is the rear-wheel deflection angle.

By substituting the center-of-mass sideslip angle $\beta$ as zero and the lateral acceleration of the vehicle $\dot{v}$ as zero into the center-of-mass sideslip angle function of the vehicle, the rear-wheel deflection angle of the vehicle is obtained by the following formula:

$$\delta_2 = -\frac{k_1}{k_2}\delta_1 + \frac{mu^2 + ak_1 - bk_1}{k_2 u}\omega_r.$$

When the center-of-mass sideslip angle $\beta$ is zero, the center-of-mass sideslip angle may be controlled within a stable working range, so that the rear-wheel deflection angle of the vehicle may maintain the smoothness of the vehicle during driving.

Step 2072: controlling the front wheels of the vehicle based on the expected front-wheel deflection angle.

In specific implementation, the expected front-wheel deflection angle is sent to a controller, and the controller is configured to control the front wheels based on control information, thereby improving driving smoothness and reducing safety risks during driving.

Step 208: controlling the rear wheels of the vehicle based on the rear-wheel deflection direction and the rear-wheel deflection angle.

In specific implementation, the rear-wheel deflection direction and the rear-wheel deflection angle are sent to the controller, and the controller is configured to control the rear wheels of the vehicle based on the control information. The control information includes the rear-wheel deflection direction and the rear-wheel deflection angle, thereby improving driving smoothness and reducing safety risks during driving.

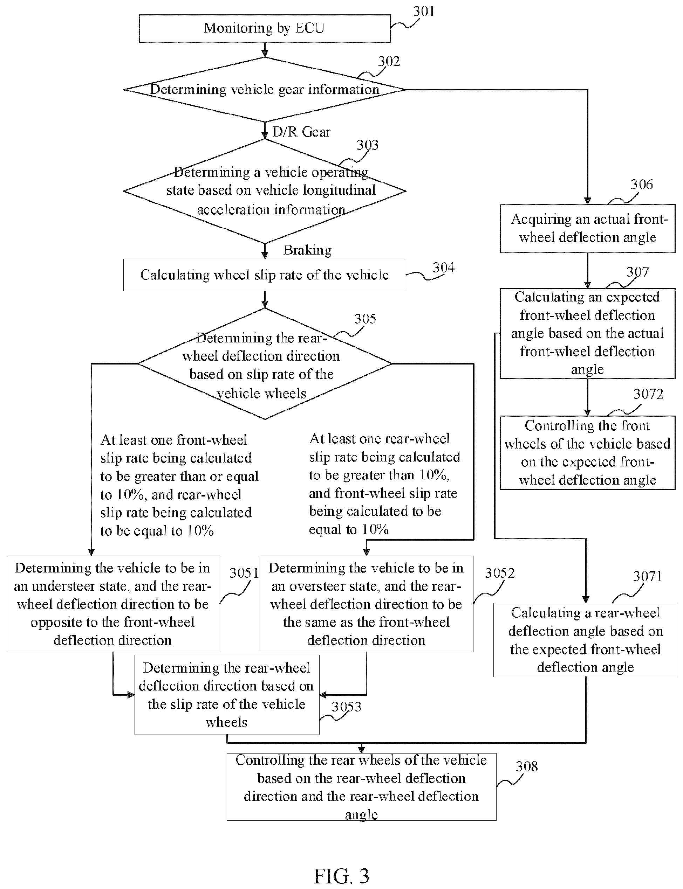

Based on a same inventive concept, in response to the vehicle being in a braking state, another embodiment of the present disclosure in the application scenario is shown in FIG. 3. The method includes the following steps.

Step 301: acquiring vehicle information.

In specific implementation, the vehicle information is monitored and obtained through an Electronic Control Unit (ECU), and the vehicle information includes basic vehicle information, vehicle operation information, front-wheel angle information, etc. The basic vehicle information includes a vehicle mass, vehicle tire information, etc. The vehicle operation information includes vehicle angle information, vehicle speed, vehicle gear information, etc. The front-wheel angle information is obtained through a steering wheel. Through the above solution, the rear-wheel deflection direction may be determined based on the obtained vehicle information, and subsequent steps, thereby improving the accuracy of the judgment.

Step 302: determining vehicle gear information.

In specific implementation, the vehicle gear information is obtained through internal sensors of the vehicle. The gear information includes a forward gear (D gear) and a reverse gear (R gear), which provide basis for subsequent determination of the rear-wheel deflection direction of the vehicle.

Step 303: determining a vehicle operating state based on vehicle longitudinal acceleration information.

In specific implementation, the vehicle interior includes a vehicle speed sensor, which collects the vehicle's longitudinal speed. Based on the obtained longitudinal speed, the longitudinal acceleration of the vehicle is calculated. The vehicle's operating state, including driving state and braking state, is determined based on the longitudinal acceleration information. Through the above solution, the operating state of the vehicle is determined based on the longitudinal acceleration information. In subsequent steps, in response to the vehicle being in the driving state, the wheel slip ratio is calculated; in response to the vehicle being in the braking state, the wheel slip rate is calculated for subsequent determination of the rear-wheel deflection direction.

Step 304: calculating wheel slip rate of the vehicle.

In specific implementation, vehicle information is obtained through sensors, including a wheel speed, tire rolling radius, a longitudinal speed, gear information, and vehicle acceleration information. The vehicle includes a wheel speed sensor and a vehicle speed sensor. The wheel speed is collected by the wheel speed sensor, and the longitudinal speed of the vehicle is collected by the vehicle speed sensor. A tire rolling radius characteristic map is obtained through a tire drum test, and the tire rolling radius is determined based on tire pressure and speed information. Based on the above vehicle information, the slip rate or the slip ratio of the wheel may be calculated, and the rear-wheel deflection direction is determined based on the calculated slip rate. The wheel slip rate of the vehicle is calculated by the following formula:

$$\mathrm{K} = (u - \omega \cdot R)/u.$$

Therein, K is the slip rate of the vehicle tires, $\omega$ is the wheel speed of the vehicle tires, R is the rolling radius of the vehicle tires, and u is the longitudinal speed of the vehicle.

Step 305: determining the rear-wheel deflection direction based on the slip rate of the vehicle wheels.

In specific implementation, the vehicle state is determined based on the calculated wheel slip rate. The vehicle state refers to an operating state of the vehicle at a current moment, including an understeer state and an oversteer state. According to the above solution, the rear-wheel deflection direction is determined by the calculated slip rate, and the rear-wheel control is achieved by the rear-wheel deflection direction in conjunction with a rear-wheel deflection angle obtained in the following steps, so that a judgment result is more accurate, thereby improving driving safety.

In some embodiments, step 305 specifically includes the following steps.

Step 3051: in response to at least one front-wheel slip rate being calculated to be greater than or equal to 10%, and at least one rear-wheel slip rate being calculated to be equal to 10%, determining the vehicle to be in an understeer state, and the rear-wheel deflection direction to be opposite to the front-wheel deflection direction.

In specific implementation, by determining the wheel slip rate satisfies the condition that at least one front-wheel slip rate is calculated to be greater than or equal to 10%, and at least one rear-wheel slip rate is calculated to be equal to 10%, the vehicle is determined to be in the understeer state, and the rear-wheel deflection direction is determined to be opposite to the front-wheel deflection direction, which are used in subsequent steps to calculate a rear-wheel deflection angle. By controlling the rear wheels to adjust according to the opposite deflection direction relative to the front wheels and the rear-wheel deflection angle, a vehicle front may be prevented from sliding out along a tangent direction of a curve, thereby reducing safety risks.

Step 3052: in response to at least one rear-wheel slip rate being calculated to be greater than or equal to 10%, and then at least one front-wheel slip rate being calculated to be equal to 10%, determining the vehicle to be in an oversteer state, and the rear-wheel deflection direction to be the same as the front-wheel deflection direction.

In specific implementation, by determining the wheel slip rate satisfies the condition that at least one rear-wheel slip rate is calculated to be greater than 10%, and at least one front-wheel slip rate is calculated to be equal to 10%, the vehicle is determined to be in the oversteer state, and the rear-wheel deflection direction is determined to be the same as the front-wheel deflection direction, which are used in subsequent steps to calculate a rear-wheel deflection angle. By controlling the rear wheels to adjust according to the opposite deflection direction relative to the front wheels and the rear-wheel deflection angle, a vehicle rear may be prevented from sliding out along a tangent direction of a curve, thereby reducing safety risks.

Step 3053: determining the rear-wheel deflection direction based on the slip rate of the vehicle wheels.

In specific implementation, the rear-wheel deflection direction is determined based on the calculated wheel slip rate. The deflection direction includes a deflection direction opposite to the front-wheel deflection direction or a deflection direction which is the same as the front-wheel deflection direction. In response to determining the vehicle being in the understeer state based on the wheel slip rate, the rear-wheel deflection direction is determined to be opposite to the front-wheel deflection direction; in response to determining the vehicle being in the oversteer state based on the wheel slip rate, the rear-wheel deflection direction is determined to be the same as the front-wheel deflection direction, thereby making a judgment result more accurate.

Step 306: acquiring an actual front-wheel deflection angle.

In specific implementation, the actual front-wheel deflection angle is obtained through the steering wheel of the vehicle.

Step 307: calculating an expected front-wheel deflection angle based on the actual front-wheel deflection angle.

In specific implementation, the expected front-wheel deflection angle is obtained by performing calculation based on a front-wheel steering control coefficient and the actual front-wheel deflection angle through the following formula: $\delta_1 = d * \delta$.

Therein, $\delta_1$ is the expected front-wheel deflection angle, $d$ is the front-wheel steering control coefficient, and $\delta$ is the actual front-wheel deflection angle.

The front-wheel steering control coefficient is obtained by querying the relationship table between the vehicle speed, an average front-wheel slip rate, and the front-wheel steering control coefficient.

When the vehicle is in a driving state, the vehicle information includes the average front-wheel slip ratio. By querying the relationship table between the vehicle speed, the average front-wheel slip ratio and the front-wheel steering control coefficient, the front-wheel steering control coefficient may be determined based on the vehicle speed and the average front-wheel slip ratio. For example, when the vehicle speed is zero and the average front-wheel slip ratio is -0.2%, the front-wheel steering control coefficient is 0.8.

When the vehicle is in a braking state, the acquired vehicle information includes the average front-wheel slip rate. By querying the relationship table between the vehicle speed, the average front-wheel slip rate, and front-wheel steering control coefficient, the front-wheel steering control coefficient may be determined based on the vehicle speed and the average front-wheel slip rate. For example, when the vehicle speed is zero and the average front-wheel slip rate is 0.2%, the front-wheel steering control coefficient is 0.8.

In some embodiments, step 307 specifically includes the following steps.

Step 3071: calculating a rear-wheel deflection angle based on the expected front-wheel deflection angle.

In specific implementation, after the vehicle operation information is obtained, a center-of-mass sideslip angle function is obtained through calculation on the vehicle operation information based on a two-degree-of-freedom model algorithm of the vehicle.

The vehicle operation information includes a longitudinal speed $u$, acceleration $\dot{v}$, a center-of-mass sideslip angle $\beta$, and yaw rate of the vehicle $\omega_r$. The vehicle operation information is substituted into the two-degree-of-freedom vehicle model algorithm for calculation, so that the vehicle center-of-mass sideslip angle function is obtained as the following formula:

$$(k_1 + k_2)\beta + \frac{1}{u}(ak_1 - bk_2)\omega_r - k_1\delta_1 - k_2\delta_2 = m(\dot{v} + u\omega_r).$$

Therein, m is a total mass of the vehicle, a is a distance from a centroid to a front axle, b is a distance from the centroid to a rear axle, $k_1$ is cornering stiffness of the front axle, $k_2$ is cornering stiffness of the rear axle, $\delta_1$ is the front-wheel deflection angle, and $\delta_2$ is the rear-wheel deflection angle.

By substituting the center-of-mass sideslip angle $\beta$ as zero and the lateral acceleration of the vehicle $\dot{v}$ as zero into the center-of-mass sideslip angle function of the vehicle, the rear-wheel deflection angle of the vehicle is obtained by the following formula:

$$\delta_2 = -\frac{k_1}{k_2}\delta_1 + \frac{mu^2 + ak_1 - bk_1}{k_2 u}\omega_r.$$

When the center-of-mass sideslip angle $\beta$ is zero, the center-of-mass sideslip angle may be controlled within a stable working range, so that the rear-wheel deflection angle of the vehicle may maintain the smoothness of the vehicle during driving.

Step 3072: controlling the front wheels of the vehicle based on the expected front-wheel deflection angle.

In specific implementation, the expected front-wheel deflection angle is sent to a controller, and the controller is configured to control the front wheels based on control information, thereby improving driving smoothness and reducing safety risks during driving.

Step 308: controlling the rear wheels of the vehicle based on the rear-wheel deflection direction and the rear-wheel deflection angle.

In specific implementation, the rear-wheel deflection direction and the rear-wheel deflection angle are sent to the controller, and the controller is configured to control the rear wheels of the vehicle based on the control information. The control information includes the rear-wheel deflection direction and the rear-wheel deflection angle, thereby improving driving smoothness and reducing safety risks during driving.

It should be noted that the method provided in the embodiments of the present disclosure may be executed by a single device, such as a computer or a server. The method provided in the embodiment may also be applied in a distributed scenario, where multiple devices cooperate to complete the task. In such a distributed scenario, one of the multiple devices may only execute one or more steps of the method provided in the embodiments of the present disclosure, and these multiple devices may interact with each other to complete the method.

It should be noted that some embodiments of the present disclosure have been described above. Other embodiments are within the scope of the appended claims. In some cases, actions or steps recorded in the claims may be performed in a different order than in the above embodiments and may still achieve expected results. In addition, the processes depicted in the accompanying drawings do not necessarily require a specific order or continuous order shown to achieve the expected results. In some implementations, multitasking and parallel processing are also possible or may be advantageous.

Based on a same inventive concept, corresponding to the method of any of the above embodiments, the present disclosure also provides a system for controlling front and rear wheels.

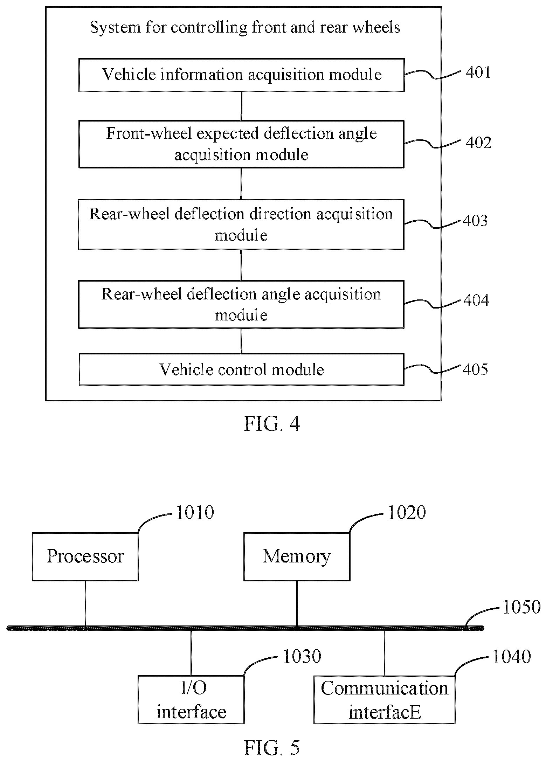

Referring to FIG. 4, the system for controlling front and rear wheels includes:

a vehicle information acquisition module 401, configured to acquire vehicle information; where the vehicle information includes an actual front-wheel deflection angle;
a front-wheel expected deflection angle acquisition module 402, configured to process the actual front-wheel deflection angle to obtain an expected front-wheel deflection angle;
a rear-wheel deflection direction acquisition module 403, configured to determine, based on the vehicle information, a rear-wheel deflection direction to obtain the rear-wheel deflection direction;
a rear-wheel deflection angle acquisition module 404, configured to determine, based on a center-of-mass sideslip angle of a vehicle and lateral acceleration of the vehicle, a rear-wheel deflection angle by using the expected front-wheel deflection; and

A vehicle control module 405, configured to control the front-wheels based on the expected front-wheel deflection angle, and control the rear wheels based on the rear-wheel deflection direction and the rear-wheel deflection angle.

In some embodiments, the vehicle information includes: vehicle speed, average front-wheel slip ratio, and average front-wheel slip rate.

The front-wheel expected deflection angle acquisition module 402 includes:

a front-wheel steering control coefficient acquisition unit, configured to obtain the front-wheel steering control coefficient by querying a relationship table between the vehicle speed, the average front-wheel slip ratio, and front-wheel steering control coefficients to obtain a front-wheel steering control coefficient; or, querying a relationship table between the vehicle speed, the average front-wheel slip rate, and front-wheel steering control coefficients to obtain a front-wheel steering control coefficient;

a front-wheel expected deflection angle acquisition unit, configured to perform calculation based on the front-wheel steering control coefficient and the actual front-wheel deflection angle to obtain the expected front-wheel deflection angle by: $\delta_1 = d * \delta$;

where, $\delta_1$ is the expected front-wheel deflection angle, $d$ is the front-wheel steering control coefficient, and $\delta$ is the actual front-wheel deflection angle.

In some embodiments, the rear-wheel deflection angle acquisition module 404 includes:

a rear-wheel deflection angle acquisition unit, configured to process the expected front-wheel deflection angle based on a rear-wheel deflection angle relationship function determined by a center-of-mass sideslip angle of the vehicle and the lateral acceleration of the vehicle to obtain the rear-wheel deflection angle; where the rear-wheel deflection angle relationship function is obtained based on a two-degree-of-freedom model algorithm of the vehicle.

In some embodiments, before the rear-wheel deflection angle acquisition module 404, the control system further includes:

a center-of-mass sideslip angle function acquisition unit, configured to acquire, based on the two-degree-of-freedom model algorithm of the vehicle, a center-of-mass sideslip angle function of the vehicle, where the center-of-mass sideslip angle function of the vehicle includes the center-of-mass sideslip angle of the vehicle and the lateral acceleration of the vehicle; and

a rear-wheel deflection angle relationship function acquisition unit, configured to acquire, based on the center-of-mass sideslip angle function of the vehicle and the expected front-wheel deflection angle, the rear-wheel deflection angle relationship function when it is determined that the center-of-mass sideslip angle of the vehicle and the lateral acceleration of the vehicle satisfy preset conditions.

In some embodiments, the center-of-mass sideslip angle function acquisition unit includes:

a center-of-mass sideslip angle function acquisition sub-unit, configured to acquire, based on the vehicle two-degree-of-freedom model algorithm, the center-of-mass sideslip angle function by the following formula:

$$(k_1 + k_2)\beta + \frac{1}{u}(ak_1 - bk_2)\omega_r - k_1\delta_1 - k_2\delta_2 = m(\dot{v} + u\omega_r).$$

Therein, m is a total mass of the vehicle, a is a distance from a centroid to a front axle, b is a distance from the centroid to a rear axle, $k_1$ is cornering stiffness of the front axle, $k_2$ is cornering stiffness of the rear axle, $u$ is a longitudinal speed of the vehicle, $\dot{v}$ is acceleration of the vehicle, $\beta$ is the center-of-mass sideslip angle of the vehicle, $\omega_r$ is yaw rate of the vehicle, $\delta_1$ is the front-wheel deflection angle, and $\delta_2$ is the rear-wheel deflection angle.

In some embodiments, the rear-wheel deflection angle relationship function acquisition unit includes:

a rear-wheel deflection angle relationship function acquisition sub-unit, configured to determine, based on the center-of-mass sideslip angle function of the vehicle, the rear-wheel deflection angle relationship function as the following formula, when it is determined that the sideslip angle is zero and the vehicle lateral acceleration is zero:

$$\delta_2 = -\frac{k_1}{k_2}\delta_1 + \frac{mu^2 + ak_1 - bk_1}{k_2 u}\omega_r.$$

In some embodiments, the rear-wheel deflection direction acquisition module 303 includes:

a vehicle state determination unit, configured to determine, based on the vehicle information, a vehicle state; and

a slip ratio calculation unit, configured to calculate the vehicle tire slip ratio in response to determining the vehicle state being in a driving state, and determine, based on the slip ratio of the vehicle tires, the rear-wheel deflection direction, where the slip ratio of the vehicle tires includes: front-wheel slip ratio and rear-wheel slip ratio; or,

a slip rate calculation unit, configured to calculate the vehicle tire slip rate in response to determining the vehicle state being in a braking state, and determine, based on the slip rate of the vehicle tires, the rear-wheel deflection direction, where the slip ratio of the vehicle tires includes: front-wheel slip rate and rear-wheel slip rate.

In some embodiments, the slip ratio calculation unit includes:

a reverse deflection judgment sub-unit, configured to determine the vehicle being in an understeer state, and the rear-wheel deflection direction of the vehicle being opposite to the front-wheel deflection direction in response to determining the vehicle being in the driving state, when at least one front-wheel slip ratio satisfies a first front-wheel slip ratio condition, and at least one rear-wheel slip ratio satisfies a first rear-wheel slip ratio condition; and

a same-direction deflection judgment sub-unit, configured to determine the vehicle being in an oversteer state, and the rear-wheel deflection direction of the vehicle being the same as the front-wheel deflection direction in response to determining the vehicle being in the driving state, when at least one front-wheel slip ratio satisfies a second front-wheel slip ratio condition, and at least one rear-wheel slip ratio satisfies a second rear-wheel slip ratio condition.

The slip rate calculation unit includes:

a reverse deflection judgment sub-unit, configured to determine the vehicle being in an understeer state, and the rear-wheel deflection direction of the vehicle being opposite to the front-wheel deflection direction in response to determining the vehicle being in a braking state, when at least one front-wheel slip rate satisfies a first front-wheel slip rate condition, and at least one rear-wheel slip rate satisfies a first rear-wheel slip rate condition; and

a same-direction deflection judgment sub-unit, configured to determine the vehicle being in an oversteer state, and the rear-wheel deflection direction of the vehicle being the same as the front-wheel deflection direction in response to determining the vehicle being in the braking state, when at least one front-wheel slip rate satisfies a second front-wheel slip rate condition, and at least one rear-wheel slip rate satisfies a second rear-wheel slip rate condition.

For convenience of description, the device mentioned above is described by dividing functions into various modules. Of course, when implementing the present disclosure, the functions of each module can be implemented in the same or different software and/or hardware.

The device provided in the above embodiments is used to implement the corresponding method for controlling front and rear wheels in any of the aforementioned embodiments, and has the beneficial effects corresponding to method embodiments, which will not be repeated here.

Based on a same inventive concept, corresponding to the method of any of the above embodiments, the present disclosure further provides an electronic device, including a memory and a processor, where a computer program is stored on the memory and executable on the processor. The processor is configured to execute the program to implement the method for controlling front and rear wheels provided in any of the above embodiments.

FIG. 5 shows a more specific hardware structural diagram of an electronic device provided in this embodiment. The device may include: a processor 1010, a memory 1020, and I/O interface 1030, a communication interface 1040, and a bus 1050. The processor 1010, memory 1020, the I/O interface 1030, and the communication interface 1040 are connected to each other within a device through the bus 1050 for communication.

The processor 1010 may be a general Central Processing Unit (CPU), a microprocessor, an Application Specific Integrated Circuit (ASIC), or one or more integrated circuits, etc., which is configured to execute related programs and implement the technical solutions provided in the embodiments of the present specification.

The memory 1020 may be a Read Only Memory (ROM), a Random Access Memory (RAM), static storage devices, dynamic storage devices, etc. The memory 1020 may be used to store an operating system and other applications. When implementing the technical solutions provided in the embodiments of this specification through software or firmware, the relevant program codes are stored in the memory 1020 and called and executed by the processor 1010.

The I/O interface 1030 is used to connect I/O modules to achieve information input and output. The I/O module may be configured as a component in a device (not shown in the figure) or may be externally connected to the device to provide corresponding functions. The input devices may include a keyboard, mouse, touch screen, microphone, various sensors, etc. The output devices may include a display, speaker, vibrator, indicator light, etc.

The communication interface 1040 is used to connect a communication module (not shown in the figure) to achieve communication interaction between this device and other devices. Communication may be realized through wired methods (such as Universal Serial Bus (USB), network cables, etc.) or through wireless methods (such as mobile networks, Wireless Fidelity (WIFI), Bluetooth, etc.) by the communication module.

The bus 1050 includes a pathway for transmitting information between various components of the device (such as the processor 1010, memory 1020, the I/O interface 1030, and the communication interface 1040).

It should be noted that although the above device only shows the processor 1010, the memory 1020, the I/O interface 1030, the communication interface 1040, and the bus 1050, in specific implementations, the device may also include other components necessary for normal operation. In addition, those skilled in the art can understand that the above device may only contain components necessary to implement the solutions of the embodiments of this specification, and does not need to contain all the components shown in the figure.

The electronic device provided in the above embodiments is used to implement the corresponding method for controlling front and rear wheels in any of the aforementioned embodiments, and has the beneficial effects corresponding to method embodiments, which will not be repeated here.

Based on a same inventive concept, corresponding to the method embodiments in any of the above embodiments, the present disclosure further provides a non-transitory computer-readable storage medium. The non-transitory computer-readable storage medium is configured to store computer instructions, the computer instructions are configured to be executed by a computer to implement the aforementioned method for controlling front and rear wheels provided in any of the above embodiments.

The computer-readable medium of this embodiment includes permanent and non-permanent, removable and non-removable media, which can be implemented by any method or technology for information storage. The information can be computer-readable instructions, data structures, program modules, or other data. Examples of the computer storage medium include, but are not limited to, a phase-change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a read-only compact disc read-only memory (CD-ROM), a digital versatile disc (DVD) or other optical storage, magnetic cassettes, magnetic tapes, magnetic disk storage or other magnetic storage devices, or any other non-transitory medium that can be used to store information accessible by computing devices.

The computer instructions stored in the storage medium of the above embodiments are used to make the computer execute the method for controlling front and rear wheels as in any of the above embodiments, and have the beneficial effects corresponding to method embodiments, which will not be repeated here.

Based on a same inventive concept, corresponding to the method embodiments in any of the above embodiments, the present disclosure also provides a vehicle, including the system for controlling front and rear wheels in the above embodiments, or the electronic device, or the storage medium provided in the above embodiments, to implement the method for controlling front and rear wheels in any of the method embodiment mentioned above.

The vehicle of the above embodiments is used to implement the method for controlling front and rear wheels of any of the foregoing embodiments, and has the beneficial effects corresponding to method embodiments, which will not be repeated here.

Those skilled in the art should understand that the discussion of any of the above embodiments is exemplary only, and is not intended to imply that the scope of the present disclosure (including the claims) is limited to these examples; under the idea of the present disclosure, the technical features in the above embodiments or different embodiments may also be combined, the steps may be implemented in any order, and there are many other variations in different aspects of the embodiments of the present disclosure as above, which are not provided in detail for the sake of brevity.

In addition, in order to simplify the description and discussion, and in order not to make the embodiments of the present disclosure difficult to understand, the known power/ground connections of integrated circuit (IC) chips and other components may or may not be shown in the provided drawings. In addition, the device may be shown in a form of a block diagram, in order to avoid making the embodiments of the present disclosure difficult to understand, and this also takes into account the fact that the details of the implementation of these block diagram devices are highly dependent on the platform on which the embodiments of the present disclosure are to be implemented (i.e., these details should be completely within the understanding of those skilled in the art). In the case where specific details (e.g., circuits) are set forth to describe exemplary embodiments of the present disclosure, it will be obvious to those skilled in the art that the embodiments of the present disclosure can be implemented without these specific details or with changes in these specific details. Therefore, these descriptions should be considered illustrative rather than restrictive.

Although the present disclosure has been described in conjunction with specific embodiments of the present disclosure, many alternatives, modifications, and variations of these embodiments will be obvious to those skilled in the art from the foregoing description. For example, other memory architectures (e.g., dynamic RAM (DRAM)) can use the embodiments discussed.

The embodiments of the present disclosure are intended to cover all such alternatives, modifications, and variations that fall within the broad scope of the appended claims. Therefore, any omissions, modifications, equivalent replacements, improvements, etc. made within the spirit and principles of the embodiments of the present disclosure shall be included within the protection scope of the present disclosure.

**Claims**

**1.** A method for controlling front and rear wheels, comprising:

acquiring (101) vehicle information; wherein the vehicle information comprises an actual front-wheel deflection angle;
processing (102) the actual front-wheel deflection angle to obtain an expected front-wheel deflection angle;

determining (103), based on the vehicle information, a rear-wheel deflection direction to obtain the rear-wheel deflection direction;

determining (104), based on a center-of-mass sideslip angle of a vehicle and lateral acceleration of the vehicle, a rear-wheel deflection angle by using the expected front-wheel deflection; and

controlling (105) the front-wheels based on the expected front-wheel deflection angle, and controlling the rear wheels based on the rear-wheel deflection direction and the rear-wheel deflection angle.

2. The method according to claim 1, wherein the vehicle information comprises: vehicle speed, average front-wheel slip ratio, and average front-wheel slip rate;

the processing (102) the actual front-wheel deflection angle to obtain an expected front-wheel deflection angle comprises:

querying (1021) a relationship table between the vehicle speed, the average front-wheel slip ratio, and front-wheel steering control coefficients to obtain a front-wheel steering control coefficient; or querying a relationship table between the vehicle speed, the average front-wheel slip rate, and front-wheel steering control coefficients to obtain a front-wheel steering control coefficient; and

performing (1022) calculation based on the front-wheel steering control coefficient and the actual front-wheel deflection angle to obtain the expected front-wheel deflection angle by:

$$\delta_1 = d * \delta$$

wherein $\delta_1$ is the expected front-wheel deflection angle, $d$ is the front-wheel steering control coefficient, and $\delta$ is the actual front-wheel deflection angle.

3. The method according to claim 1, wherein the determining (104), based on a center-of-mass sideslip angle of a vehicle and lateral acceleration of the vehicle, a rear-wheel deflection angle by using the expected front-wheel deflection comprises:

processing (104A) the expected front-wheel deflection angle based on a rear-wheel deflection angle relationship function determined by the center-of-mass sideslip angle of the vehicle and the lateral acceleration of the vehicle to obtain the rear-wheel deflection angle; wherein the rear-wheel deflection angle relationship function is obtained based on a two-degree-of-freedom model algorithm of the vehicle.

4. The method according to claim 3, before the processing (104) the expected front-wheel deflection angle based on a rear-wheel deflection angle relationship function determined by the center-of-mass sideslip angle of the vehicle and the lateral acceleration of the vehicle to obtain the rear-wheel deflection angle, further comprising:

acquiring (1041), based on the two-degree-of-freedom model algorithm of the vehicle, a center-of-mass sideslip angle function of the vehicle, wherein the center-of-mass sideslip angle function of the vehicle comprises the center-of-mass sideslip angle of the vehicle and the lateral acceleration of the vehicle;

acquiring (1042), based on the center-of-mass sideslip angle function of the vehicle and the expected front-wheel deflection angle, the rear-wheel deflection angle relationship function when it is determined that the center-of-mass sideslip angle of the vehicle and the lateral acceleration of the vehicle satisfy preset conditions.

5. The method according to claim 4, wherein the acquiring (1041), based on the two-degree-of-freedom model algorithm of the vehicle, a center-of-mass sideslip angle function of the vehicle comprises:

acquiring (1041A), based on the two-degree-of-freedom model algorithm of the vehicle, the center-of-mass sideslip angle function by the following formula:

$$(k_1 + k_2)\beta + \frac{1}{u}(ak_1 - bk_2)\omega_r - k_1\delta_1 - k_2\delta_2 = m(\dot{v} + u\omega_r)$$

wherein, m is a total mass of the vehicle, a is a distance from a centroid to a front axle, b is a distance from the centroid to a rear axle, $k_1$ is cornering stiffness of the front axle, $k_2$ is cornering stiffness of the rear axle, u is a longitudinal speed of the vehicle, $\dot{v}$ is acceleration of the vehicle, $\beta$ is the center-of-mass sideslip angle of the vehicle, $\omega_r$ is yaw rate of the vehicle, $\delta_1$ is the front-wheel deflection angle, and $\delta_2$ is the rear-wheel deflection angle.

**6.** The method according to claim 5, wherein the acquiring (1042), based on the center-of-mass sideslip angle function of the vehicle and the expected front-wheel deflection angle, the rear-wheel deflection angle relationship function when it is determined that the center-of-mass sideslip angle of the vehicle and the lateral acceleration of the vehicle satisfy preset conditions comprises:

determining (1042A), based on the center-of-mass sideslip angle function of the vehicle, the rear-wheel deflection angle relationship function as the following formula, when it is determined that the sideslip angle is zero and the vehicle lateral acceleration is zero:

$$\delta_2 = -\frac{k_1}{k_2}\delta_1 + \frac{mu^2 + ak_1 - bk_1}{k_2 u}\omega_r.$$

**7.** The method according to claim 1, wherein the determining (103), based on the vehicle information, a rear-wheel deflection direction to obtain the rear-wheel deflection direction comprises:

determining (1031), based on the vehicle information, a vehicle state;
in response to determining the vehicle state being in a driving state, calculating (1032) slip ratio of vehicle tires, and determining, based on the slip ratio of the vehicle tires, the rear-wheel deflection direction, wherein the slip ratio of the vehicle tires comprises: front-wheel slip ratio and rear-wheel slip ratio; or
in response to determining the vehicle state being in a braking state, calculating (1033) slip rate of vehicle tires, and determining, based on the slip rate of the vehicle tires, the rear-wheel deflection direction, wherein the slip rate of the vehicle tires comprises: front-wheel slip rate and rear-wheel slip rate.

**8.** The method according to claim 7, wherein the in response to determining the vehicle state is a driving state, calculating (1032) slip ratio of vehicle tires comprises:

in response to determining the vehicle state being in the driving state, acquiring (10321) a wheel speed of the vehicle tires, rolling radius of the vehicle tires, and a longitudinal speed of the vehicle;
performing (10322) calculation on the wheel speed of the vehicle tires, the rolling radius of the vehicle tires, and the longitudinal speed of the vehicle to obtain the slip ratio of the vehicle tires by the following formula:

$$S = (\omega \cdot R - u)/(\omega \cdot R),$$

wherein S is the slip ratio of the vehicle tires, $\omega$ is the wheel speed of the vehicle tires, R is the rolling radius of the vehicle tires, and $u$ is the longitudinal speed of the vehicle.

**9.** The method according to claim 7, wherein the in response to determining the vehicle state being in a braking state, calculating (1033) slip rate of vehicle tires comprises:

in response to determining the vehicle state being in the braking state, acquiring (10331) a wheel speed of the vehicle tires, rolling radius of the vehicle tires, and a longitudinal speed of the vehicle;
performing (10332) calculation on the wheel speed of the vehicle tires, the rolling radius of the vehicle tires, and the longitudinal speed of the vehicle to obtain the slip rate of the vehicle tires by the following formula:

$$K = (u - \omega \cdot R)/u,$$

wherein K is the slip rate of the vehicle tires, $\omega$ is the wheel speed of the vehicle tires, R is the rolling radius of the vehicle tires, and $u$ is the longitudinal speed of the vehicle.

**10.** The method according to claim 7, wherein the in response to determining the vehicle state being in a driving state, calculating (1032) slip ratio of vehicle tires, and determining, based on the slip ratio of the vehicle tires, the rear-wheel deflection direction comprises:

in response to determining the vehicle being in the driving state, determining (1032A) the vehicle to be in an understeer state, and the rear-wheel deflection direction to be opposite to the front-wheel deflection direction, when at least one front-wheel slip ratio satisfies a first front-wheel slip ratio condition, and at least one rear-wheel slip ratio satisfies a first rear-wheel slip ratio condition; or
in response to determining the vehicle being in the driving state, determining (1032B) the vehicle to be in an oversteer state, and the rear-wheel deflection direction to be the same as the front-wheel deflection direction, when at least one front-wheel slip ratio satisfies a second front-wheel slip ratio condition, and at least one rear-wheel slip ratio satisfies a second rear-wheel slip ratio condition.

11. The method according to claim 7, wherein the in response to determining the vehicle state being in a braking state, calculating slip rate of vehicle tires, and determining (1033), based on the slip rate of the vehicle tires, the rear-wheel deflection direction comprises:

in response to determining the vehicle being in the braking state, determining (1033A) the vehicle to be in an understeer state, and the rear-wheel deflection direction to be opposite to the front-wheel deflection direction, when at least one front-wheel slip rate satisfies a first front-wheel slip rate condition and at least one rear-wheel slip rate satisfies a first rear-wheel slip rate condition; or
in response to determining the vehicle being in the braking state, determining (1033B) the vehicle to be in an oversteer state, and the rear-wheel deflection direction to be the same as the front-wheel deflection direction, when at least one front-wheel slip rate satisfies a second front-wheel slip rate condition and at least one rear-wheel slip rate satisfies a second rear-wheel slip rate condition.

12. A system for controlling front and rear wheels, comprising:

a vehicle information acquisition module (401), configured to acquire vehicle information; wherein the vehicle information comprises an actual front-wheel deflection angle;
a front-wheel expected deflection angle acquisition module (402), configured to process the actual front-wheel deflection angle to obtain an expected front-wheel deflection angle;
a rear-wheel deflection direction acquisition module (403), configured to determine, based on the vehicle information, a rear-wheel deflection direction to obtain the rear-wheel deflection direction;
a rear-wheel deflection angle acquisition module (404), configured to determine, based on a center-of-mass sideslip angle of a vehicle and lateral acceleration of the vehicle, a rear-wheel deflection angle by using the expected front-wheel deflection; and
a vehicle control module (405), configured to control the front-wheels based on the expected front-wheel deflection angle, and control the rear wheels based on the rear-wheel deflection direction and the rear-wheel deflection angle.

13. An electronic device, comprising a memory (1020), a processor (1010), and a computer program stored on the memory (1020) and executable on the processor (1020), wherein the processor is configured to execute the program to implement the method according to any one of claims 1 to 11.

14. A non-transitory computer-readable storage medium, wherein computer instructions are stored and the computer instructions are configured to be executed by a computer to implement the method according to any one of claims 1 to 11.

15. A vehicle, comprising the system for controlling front and rear wheels according to claim 12, or the electronic device according to claim 13, or the non-transitory computer-readable storage medium according to claim 14.

Acquiring vehicle information; where the vehicle information includes an actual front-wheel deflection angle — 101

Processing the actual front-wheel deflection angle to obtain an expected front-wheel deflection angle — 102

Determining, based on the vehicle information, a rear-wheel deflection direction to obtain the rear-wheel deflection direction. — 103

Determining, based on a center-of-mass sideslip angle of a vehicle and lateral acceleration of the vehicle, a rear-wheel deflection angle by using the expected front-wheel deflection — 104

Controlling the front-wheels based on the expected front-wheel deflection angle, and controlling the rear wheels based on the rear-wheel deflection direction and the rear-wheel deflection angle — 105

FIG. 1

Monitoring by ECU — 201

Determining vehicle gear information — 202

D/R Gear

Determining a vehicle operating state based on vehicle longitudinal acceleration information — 203

Driving

Calculating wheel slip ratio of the vehicle — 204

Determining the rear-wheel deflection direction based on slip ratio of the vehicle wheels — 205

At least one front-wheel slip ratio being calculated to be less than or equal to -10% firstly, and then at least one rear-wheel slip ratio being calculated to be less than or equal to -10%

At least one rear-wheel slip ratio being calculated to be less than or equal to -10% firstly, and then at least one front-wheel slip ratio being calculated to be less than or equal to -10%

Determining the vehicle to be in an understeer state, and the rear-wheel deflection direction to be opposite to the front-wheel deflection direction — 2051

Determining the vehicle to be in an oversteer state, and the rear-wheel deflection direction to be the same as the front-wheel deflection direction — 2052

Determining the rear-wheel deflection direction based on the slip ratio of the vehicle wheels — 2053

Acquiring an actual front-wheel deflection angle — 206

Calculating an expected front-wheel deflection angle based on the actual front-wheel deflection angle — 207

Controlling the front wheels of the vehicle based on the expected front-wheel deflection angle — 2072

Calculating a rear-wheel deflection angle based on the expected front-wheel deflection angle — 2071

Controlling the rear wheels of the vehicle based on the rear-wheel deflection direction and the rear-wheel deflection angle — 208

FIG. 2

Monitoring by ECU — 301

Determining vehicle gear information — 302

D/R Gear

Determining a vehicle operating state based on vehicle longitudinal acceleration information — 303

Braking

Calculating wheel slip rate of the vehicle — 304

Determining the rear-wheel deflection direction based on slip rate of the vehicle wheels — 305

At least one front-wheel slip rate being calculated to be greater than or equal to 10%, and rear-wheel slip rate being calculated to be equal to 10%

At least one rear-wheel slip rate being calculated to be greater than 10%, and front-wheel slip rate being calculated to be equal to 10%

Determining the vehicle to be in an understeer state, and the rear-wheel deflection direction to be opposite to the front-wheel deflection direction — 3051

Determining the vehicle to be in an oversteer state, and the rear-wheel deflection direction to be the same as the front-wheel deflection direction — 3052

Determining the rear-wheel deflection direction based on the slip rate of the vehicle wheels — 3053

Acquiring an actual front-wheel deflection angle — 306

Calculating an expected front-wheel deflection angle based on the actual front-wheel deflection angle — 307

Controlling the front wheels of the vehicle based on the expected front-wheel deflection angle — 3072

Calculating a rear-wheel deflection angle based on the expected front-wheel deflection angle — 3071

Controlling the rear wheels of the vehicle based on the rear-wheel deflection direction and the rear-wheel deflection angle — 308

FIG. 3

System for controlling front and rear wheels

| Vehicle information acquisition module | 401 |

| Front-wheel expected deflection angle acquisition module | 402 |

| Rear-wheel deflection direction acquisition module | 403 |

| Rear-wheel deflection angle acquisition module | 404 |

| Vehicle control module | 405 |

FIG. 4

Processor — 1010

Memory — 1020

— 1050

I/O interface — 1030

Communication interfacE — 1040

FIG. 5

## INTERNATIONAL SEARCH REPORT

| International application No. |
|---|
| **PCT/CN2023/130834** |

**A. CLASSIFICATION OF SUBJECT MATTER**

B62D 6/00(2006.01)i; B62D 137/00(2006.01)i

According to International Patent Classification (IPC) or to both national classification and IPC

**B. FIELDS SEARCHED**

Minimum documentation searched (classification system followed by classification symbols)

IPC: B62D

Documentation searched other than minimum documentation to the extent that such documents are included in the fields searched

Electronic data base consulted during the international search (name of data base and, where practicable, search terms used)

CNTXT, ENTXTC, CNKI: 车, 前轮, 后轮, 转角, 期望, 实际, 控制; ENTXT, VEN: vehicle, front, back, rear, wheel, deflect, angle, desire, actual, control.

**C. DOCUMENTS CONSIDERED TO BE RELEVANT**

| Category* | Citation of document, with indication, where appropriate, of the relevant passages | Relevant to claim No. |
|---|---|---|
| PX | CN 115675636 A (GREAT WALL MOTOR CO., LTD.) 03 February 2023 (2023-02-03) claims 1-12, description, paragraphs 29-240, and figures 1-5 | 1-15 |
| A | CN 111762261 A (CHINA FAW CO., LTD.) 13 October 2020 (2020-10-13) description, paragraphs 56-101, and figures 1-7 | 1-15 |
| A | DE 102019203178 A1 (VOLKSWAGEN AG) 10 September 2020 (2020-09-10) description, paragraphs 33-56, and figures 1-3 | 1-15 |
| A | CN 112572411 A (BEIJING INSTITUTE OF TECHNOLOGY et al.) 30 March 2021 (2021-03-30) entire document | 1-15 |
| A | CN 112572605 A (ZHENGZHOU YUTONG BUS CO., LTD.) 30 March 2021 (2021-03-30) entire document | 1-15 |
| A | US 2014229072 A1 (HONDA MOTOR CO., LTD.) 14 August 2014 (2014-08-14) entire document | 1-15 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 February 2024** | **06 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/130834**

| Patent document cited in search report | | | Publication date (day/month/year) | Patent family member(s) | | | Publication date (day/month/year) |
|---|---|---|---|---|---|---|---|
| CN | 115675636 | A | 03 February 2023 | None | | | |
| CN | 111762261 | A | 13 October 2020 | CN | 111762261 | B | 12 November 2021 |
| | | | | WO | 2022001975 | A1 | 06 January 2022 |
| | | | | EP | 4063237 | A1 | 28 September 2022 |
| DE | 102019203178 | A1 | 10 September 2020 | DE | 102019203178 | B4 | 29 July 2021 |
| CN | 112572411 | A | 30 March 2021 | CN | 112572411 | B | 07 September 2021 |
| CN | 112572605 | A | 30 March 2021 | CN | 112572605 | B | 10 May 2022 |
| US | 2014229072 | A1 | 14 August 2014 | JP | 2014159269 | A | 04 September 2014 |
| | | | | JP | 5830554 | B2 | 09 December 2015 |
| | | | | DE | 102014202369 | A1 | 14 August 2014 |
| | | | | DE | 102014202369 | B4 | 07 February 2019 |
| | | | | US | 8886410 | B2 | 11 November 2014 |
| | | | | CN | 103978971 | A | 13 August 2014 |
| | | | | CN | 103978971 | B | 14 November 2017 |

Form PCT/ISA/210 (patent family annex) (July 2022)